# EUROPEAN PATENT APPLICATION

(11) **EP 3 771 949 A1**
(43) Date of publication of application: **03.02.2021**
(21) Application number: 19189295.9
(22) Date of filing: 31.07.2019
(51) Int. Cl.: G05B 13/02, G05B 11/00

(54) **METHOD AND CONTROLLER FOR CONTROLLING OPERATION OF A DEVICE**

(71) Applicant: Sandvik Mining and Construction G.m.b.H., 8740 Zeltweg (AT)
(72) Inventor: GIMPEL, Martin, 8740 Zeltweg (AT); POGATSCHNIGG, Reinhold, 8842 Katsch an der Mur (AT); OFFENBACHER, Michael, A-8723 Kobenz (AT)
(74) Representative: Sandvik

(57) **Abstract**

The present disclosure relates to a method for controlling operation of a device. The method comprises receiving (1010) an input representative of a reference value for an operating parameter of said device. The method further comprises obtaining (1020) a control value based on a known relationship between stored reference values and control values using the received reference value. The method further comprises operating (1030) the device with a control signal using the obtained control value. Further, the method comprises obtaining (1040) feedback relative to the operating parameter from a feedback mechanism. The method further comprises adjusting (1050) the control signal using a feedback controller based on the reference value and the feedback, and updating (1060) the relationship for the reference value based on an output from the feedback controller.

## Description

### Technical field

The present disclosure relates to the field of control systems, and more specifically to a method and a controller for controlling operation of a device with time varying properties.

### Background

Many control methods and systems are available in the market, and are constantly being developed.

An issue with many controlled systems and devices is that the behavior and response to control signals may change during the lifetime of the system or device to be controlled. Factors such as wear, leaks and temperature dependence may affect the way a system performs over time. Further, different units of the same product may act differently, due to small differences during production. When setting up a control system, a calibration routine is often required to ensure proper functionality of the control system.

Further, there is often a trade-off between speed and stability of a control system, a fast control system may become unstable, while with a slow control system it may take time for the controlled system or device to reach a desired state.

Another trade-off is between accuracy and computational power. Many control systems are implemented on industrial computers which can handle the sometimes rough conditions in which a controlled system may be located. Such industrial computers are sturdy, but often come with limited computational power compared to personal computers.

As such there is a need for new control methods and controllers to handle at least some of the previously mentioned issues.

### Summary

It is therefore an object of the present invention to overcome at least some of the above mentioned drawbacks, and to provide an improved method and an improved controller for controlling the operation of a device.

This and other objects are achieved by means of a method and a controller as defined in the appended independent claims. Other embodiments are defined by the dependent claims.

According to a first aspect of the present disclosure, a method for controlling operation of a device is provided. The method comprises receiving an input representative of a reference value for an operating parameter of the device. Further, the method comprises obtaining a control value based on a known relationship between stored reference values and control values using the received reference value. Further, the method comprises operating the device with a control signal using the obtained control value. The method further comprises obtaining feedback relative to the operating parameter from a feedback mechanism, and adjusting the control signal using a feedback controller based on the reference value and the feedback. Further, the method comprises updating the relationship for the reference value based on an output from the feedback controller.

The device to be controlled may be any controllable device or system which is configured to receive a control signal. For example, the device may be a hydraulic device or an electric device.

The input may come from a user or operator. However, the input may also be received from another entity connected to the device to be controlled or another entity connected to the device to be controller or another entity being part of a system to which the device to be controller belongs. The input may be in the form of a signal or a set point value.

The operating parameter may be any operating parameter to be controlled, or a parameter which is related to the parameter to be controlled. Such an operating parameter may for example be a speed, a position, a pressure, a rotational velocity or a flow.

In some embodiments, the received input may directly correspond to the reference value. In other embodiments, the reference value is derived or extracted from the received input.

The reference value may then be used together with the known relationship between stored reference values and control values to obtain a control value related to the reference value corresponding to (or derived from) the received input. In the following, the reference value corresponding to (or derived from) the received input may be referred to as the current (or present) reference value.

Using a known relationship to obtain a control value (with which the device is controlled), may result in a faster way of controlling than using only a feedback control method. The control value may then be used to obtain a control signal for operation of the device.

A feedback controller is used to adapt the behavior of the system (or device) by adjustment of the control signal. The feedback controller may receive feedback indicating a state of the system. Feedback may for example comprise a measured or estimated system parameter. Based on the reference value corresponding to (or derived from) the received input and the feedback, a feedback controller adjusts the control signal (e.g. the feedback controller output) in order for the operating parameter to reach the reference value.

The feedback controller in the present disclosure may for example use a difference between the reference value and a measurement (or estimate) of the operating parameter based on the feedback, sometimes referred to as a (measured/estimated) error, to generate the feedback controller output. In such cases, the feedback controller may seek to minimize the error. The output may, thus, be adjusted to minimize the difference between the reference value and the measured or estimated (actual) parameter.

It will be appreciated that the feedback controller may help in reaching the reference value for the operating parameter faster since the control already starts with a control value extracted from a known relationship of stored reference values and control values (such as from a look-up table).

The control signal may then be updated using an output from the feedback controller. For example, the output from the feedback controller may be added to the control signal. Updating the control signal with a feedback controller output, which takes into account a feedback value, creates a control loop in the system. For each operating cycle of the control loop, the control signal may become better (i.e. resulting in the device following the reference value more accurately). An operating cycle may comprise operating the device with the control signal, receiving feedback and updating the control signal by means of the feedback controller which uses the reference value and the feedback. One or more operating cycles may be performed before updating the known relationship. In other words, an output from the feedback controller, resulting from one or more operating cycles for the operating parameter to reach the reference value, is used for updating the known relationship for the reference value extracted from the input.

Updating the known relationship based on an output from the feedback controller may include updating the control value associated with the current reference value as a reflection of the output from the feedback controller. For example, the output from the feedback controller may be added to a presently stored control value associated with the current reference value. Alternatively, the stored control value may be altered with an increment or decrement of a predetermined size based on the sign of the output from the feedback controller.

As the relationship is updated, the stored relationship between control values and reference values may become closer and closer to the current actual relationship between control values and reference values such that the system/device response to a control value extracted from the relationship is improved. As such, the feedback controller may make a contribution over time to improve the relationship. When a change in the system/device occurs, the method may allow for adaptation of the control signal, and the stored relationship may be updated to reflect the change, making the system self-learning. Further, the need for an initial calibration may be reduced, as the system may perform a calibration on its own during operation.

Further, as the stored relationship may ensure a fast response with a reasonably good control signal, a conservative (or slow) feedback controller may be employed, which may provide more stability to the system.

According to some embodiments, the relationship between stored reference values and control values may comprise at least one of a list, a look-up table, a curve, and a mathematical function.

Using a list, a look-up table, a curve, or a mathematical function may improve the response time of the device to an input representing a reference value. Further, using a list, a look-up table or a curve may decrease the requirements on computational power.

According to some embodiments, the method may further comprise, before updating the relationship for the reference value based on an output from the feedback controller, verifying whether at least one update condition is fulfilled.

An update condition is a condition to be fulfilled for an update of the relationship to take place. Updating the relationship when certain conditions are met may allow for a more efficient method, as the relationship is not unnecessarily updated. For example, the number of required operations (or calculations) may be lowered.

According to some embodiments, one of the at least one update condition may be that the reference value has remained substantially constant, or within a predefined interval, for a predetermined period of time.

Such a predefined interval may be adapted to the reference value.

The response of the device may not be instantaneous or fast. If the reference value is constant for a period of time, the device may have adapted to the present reference value, and thus the present feedback controller output may be relevant to the present reference value.

According to some embodiments, one of the at least one update condition may be that the operating parameter has reached the reference value, or is within a predetermined interval from the reference value.

The feedback received from the feedback mechanism may for example be used to detect whether the operating parameter has reached the reference value or is within a predetermined range from the reference value.

When the reference value has been reached (or almost reached), the control signal may reflect the currently accurate relationship between the reference value and the control value, which may mean that the feedback controller output provided at that moment is sufficiently correct. Updating the relationship using the feedback controller output which provides the (at least almost) correct control signal results in an improved relationship between stored reference values and control values.

According to some embodiments, one of the at least one update condition may be that the control signal has been updated a predetermined number of times, or for a predetermined period of time.

For example, the number of running cycles performed by the feedback controller may be monitored, and after a predefined number of running cycles has been reached, the known relationship may be updated.

After a predetermined time or number of updates of the control signal, the control signal may have been improved. Updating the stored relationship may thus result in an improved relationship. Updating at regular intervals may result in a regular adjustment of the known relationship to the current behavior of the device.

According to some embodiments, the updating may be prevented if it is detected that the device is in a predefined state.

For some devices, the operating conditions may vary significantly. If the device is at the limits of the normal operating range, for example if it is subject to a high torque load or it is operating at a speed close to the nominal speed of the device, the response of the device to a control signal may not be representative of the normal performance/operation of the system. An update under such conditions may result in a faulty relationship which may lead to issues during subsequent normal operation. A predefined state may reflect such conditions in which an update may affect the relationship in a negative way.

According to some embodiments, the relationship may be updated for more than one reference value, in a predetermined interval of reference values from the present reference value, based on the feedback controller output and using a weighting function.

Updating some neighboring or surrounding reference values using a weighting function may provide that the new change in the relationship becomes more gradual. As such, drastic changes between control values related to successive reference values may be avoided. Thus, a smaller change in reference value may lead to a change in related control value which is not too drastic. Avoiding fast jumps in the control signal may be beneficial for the controlled device.

According to some embodiments, the method may further comprise, upon detection of an irregularity within the updated relationship, or upon detection of a predefined number of updates of the relationship, updating the relationship to lessen any irregularity within the relationship between control values and reference values.

In other words, the method may comprise smoothing the relationship between control values and reference values if irregularities (such as large peaks or values that are out of bounds) are detected. The method may further comprise smoothing of the relationship after a predetermined number of updates of the relationship has occurred.

For example, if the relationship comprises a curve, large peaks or deviations from a general trend of the curve may be removed. Smoothing may comprise updating a control value of a reference value based on control values of surrounding reference values, so that the values become more similar to control values of neighboring reference values. Smoothing may also comprise removing outliers from a data set. Smoothing may be performed using various methods, algorithms or filters. A smoother, less irregular relationship may allow for a more stable control of the device.

According to some embodiments, the method may further comprise monitoring the relationship and sending an alert in case a predetermined state is detected. Such a predetermined state may be a control value exceeding a first predefined threshold. A predetermined state may also be a difference between two control values related to two successive reference values exceeding a first predefined interval.

A control value for a specific reference value being lower or higher than expected may be an indication that there is an abnormal condition or a defect in the device (or system). A too large increase or decrease in control value between two adjacent reference values may also indicate a potential issue in the system. By sending an alert when such a condition is detected, the operator or any other entity in the system (or any other entity connected to the device) may be notified that there may be a fault within the device (or system). Further, sending alerts indicating for which reference values there may be an issue may aid in identifying and diagnosing any such fault or in operating the system in a way which avoids the affected reference values.

According to some embodiments, the method may further comprise resetting the relationship to the initially known relationship if a resetting condition is detected. Such a resetting condition may comprise a control value exceeding a second threshold. Such a resetting condition may be a difference between control values related to two successive reference values exceeding a second predefined interval.

A resetting option may provide a fail-safe option to return to the initially known relationship in case there is an issue causing the control signal to be, for example, too large.

According to some embodiments, the feedback controller may be a proportional-integral-derivative (PID) controller.

A PID controller attempts to minimize an error over time, such an error may be a difference between a set point value and a measured process variable from the system to be controlled, by adjustment of a control signal. Such a control signal is formed by a weighted sum of three terms: a proportional term, an integral term and a derivative term. The proportional term is proportional to the current error, the integral term takes into account previous errors in order to minimize any residual error, and the derivative term is used to prevent future errors using an estimate based on the current rate of change of the error.

A PID controller is a versatile controller which may be used for many different applications as long as the application has a reference value and a measurable output (feedback).

According to a second aspect of the present disclosure, a controller configured to control operation of a device is provided. The controller is configured to receive an input representative of a reference value for an operating parameter of the device. The controller is further configured to obtain a control value based on a known relationship between stored reference values and control values using the received reference value. Further, the controller is configured to operate the device with a control signal using the obtained control value. The controller is further configured to obtain a feedback relative to the operating parameter from a feedback mechanism. The controller is further configured to adjust the control signal using a feedback controller based on the reference value and the feedback and update the relationship for the reference value based on an output from the feedback controller.

The relationship may be any relationship described with reference to the embodiments of the first aspect of the disclosure.

It will be appreciated that the controller may be adapted perform any of the methods described in relation to the embodiments of the first aspect of the disclosure.

According to some embodiments, the controller is configured to operate in accordance with a method as defined by any of the embodiments described with relation to the first aspect of the present disclosure.

According to some embodiments, a hydraulic system is provided. The hydraulic system may comprise a hydraulic valve and optionally further hydraulic items. The hydraulic system may comprise a controller as described above with reference to any embodiment related to the second aspect of the present disclosure. The controller may be adapted to control operation of the at least one hydraulic valve. The hydraulic system may further comprise a feedback mechanism comprising at least one sensor. The sensor may be configured to measure a parameter of the hydraulic system. The feedback mechanism may be configured to feed back the measurement as the feedback to the second input of the controller.

In a hydraulic system, influences such as manufacturing tolerances may result in a varying behavior of the system. Parameters such as spool temperature, increasing oil leaks and wear may result in further time varying aspects. Using a combination of a conservatively tuned feedback controller, which is not prone to oscillations, in combination with a known relationship between reference values and control values, as is described in the present disclosure, may provide a more stable control while maintaining a faster response time.

According to some embodiments, a mining machine is provided. The mining machine may comprise at least one hydraulic system as described in relation to the previously described embodiment.

According to a third aspect, a storage medium comprising instructions for a controller to control operation of a device is provided. The instructions comprise: receiving an input representative of a reference value for an operating parameter of the device; obtaining a control value based on a known relationship between stored reference values and control values using the received reference value; operating the device with a control signal using the obtained control value; obtaining feedback relative to the operating parameter from a feedback mechanism; adjusting the control signal using a feedback controller based on the reference value and the feedback; and updating the relationship for the reference value based on an output from the feedback controller.

According to some embodiments, the storage medium may comprise instructions in accordance with method described with relation to any embodiments of the first aspect of the disclosure.

It will be appreciated that the storage medium may comprise instructions which correspond to any method described in the embodiments relating to the first aspect of the disclosure.

It is noted that other embodiments using all possible combinations of features recited in the above described embodiments may be envisaged. Thus, the present disclosure also relates to all possible combinations of features mentioned herein. Any embodiment described herein may be combinable with other embodiments also described herein, and the present disclosure relates to all combinations of features.

### Brief description of the drawings

Exemplifying embodiments will now be described in more detail, with reference to the following appended drawings:
Figure 1 is a schematic illustration of a controller configured to control operation of a device in accordance with some embodiments.
Figure 2 is a flowchart illustrating a method for controlling operation of a device in accordance with some embodiments;
Figure 3 is a flowchart illustrating a method for controlling operation of a device in accordance with some embodiments;
Figure 4 is a flowchart illustrating a method for controlling operation of a device in accordance with some embodiments;
Figure 5 is a schematic illustration of a hydraulic system in accordance with some embodiments;
Figure 6 is a schematic illustration of a mining machine in accordance with some embodiments; and
Figure 7 is a schematic illustration of a storage medium in accordance with some embodiments.

As illustrated in the figures, the sizes of the elements and regions may be exaggerated for illustrative purposes and, thus, are provided to illustrate the general structures of the embodiments. Like reference numerals refer to like elements throughout.

### Detailed description

Exemplifying embodiments will now be described more fully hereinafter with reference to the accompanying drawings, in which currently preferred embodiments are shown. The invention may, however, be embodied in many different forms and should not be construed as limited to the embodiments set forth herein; rather, these embodiments are provided for thoroughness and completeness, and fully convey the scope of the invention to the skilled person.

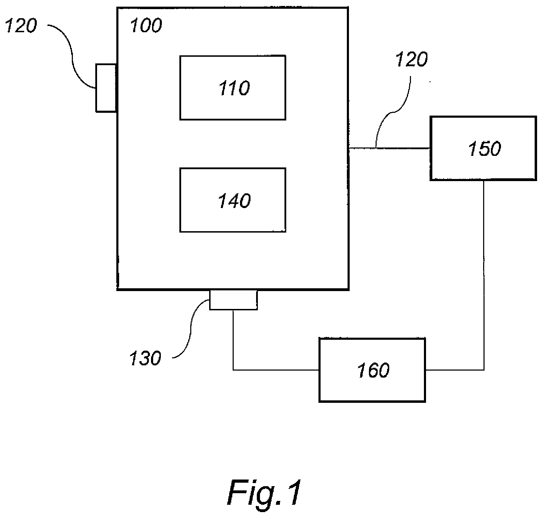

With reference to figure 1, a controller configured to control operation of a device, in accordance with some embodiments, will be described.

Figure 1 shows a controller 100 comprising a memory unit 110, a first input connection 120, a second input connection 130 and a feedback controller 140.

Figure 1 further shows a device 150 in communication with the controller via connection 101, and a feedback mechanism 160 connected to the device 150 and to the second input unit 130 of the controller 100.

The controller 100 may be configured to control operation of the device 150.

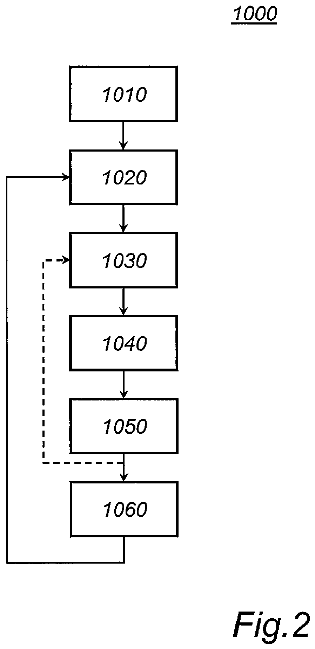

In the following, embodiments of a method for controlling operation of the device 150, which may be implemented in a controller 100, will be described with reference to figure 1 and figure 2.

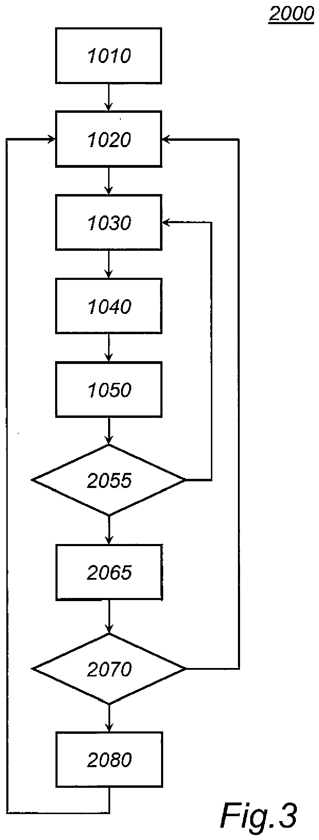

Figure 2 is a flowchart illustrating a method 1000 for controlling operation of a device in accordance with some embodiments. In the flowchart, each box represents a step (or action/operation), and the arrows linking the boxes indicate an order in which the steps may be performed. This order is an illustrative example, in other embodiments of the method, the steps may be performed in a different order. Other embodiments may comprise further steps which may be performed in between the steps illustrated in the present embodiment. Examples of such embodiments will be described with reference to figures 3-4.

As illustrated in figure 2, the method includes a step 1010 of receiving an input indicative of a reference value for an operating parameter of the device. In the embodiment illustrated in figure 1, the input may be received by the controller 100 at the first input unit 120. The input may for example be a reference signal or a set point value (e.g. a reference value). In the present example, the received input is the reference value.

The next step 1020 in the method of figure 2 comprises obtaining a control value based on a known relationship between stored reference values and control values using the received reference value. In figure 1, memory unit 110 may be configured to store such a relationship. The relationship may for example comprise a list, a look-up table, a curve or a mathematical function such that a control value may be obtained from the relationship for the received reference value.

In embodiments including a mathematical function, obtaining 1020 a control value may comprise applying the function to the received reference value.

In embodiments involving a list or a look-up table, obtaining 1020 a control value may comprise finding in the list or look-up table a control value linked to the received reference value. In such embodiments, an interpolation procedure may be employed in case a received reference value lies between two stored reference values.

In embodiments in which the relationship is represented by a curve, obtaining 1020 a control value may comprise graphically finding a control value linked to the received reference value.

As illustrated in figure 2, the method comprises operating 1030 the device using a control signal using the obtained control value. Operating 1030 the device using a control signal may be performed continuously, in parallel with the other steps of the method. In figure 1, the controller 100 may send the control signal to the device 150 via the connection 101. The connection 101 may be a wire connection or a wireless connection.

Next, feedback relative to the operating parameter is obtained (1040) from a feedback mechanism. The feedback may for example be a measurement or an estimate of the operating parameter of the device 150. In figure 1, the second input unit 130 may be configured to receive the feedback from the feedback mechanism 160.

The control signal may then be adjusted at step 1050 using a feedback controller based on the reference value and the feedback.

The general idea of using feedback control of a device (or system) to make it follow a reference value is to send a control signal to the device, observe the response of the device and to adjust the control signal such that the reference value is reached. These operations may be repeated until a desired response (relative to the reference value) of the system is observed.

In figure 1, the feedback controller 140 may be configured to generate an output which is based on the received reference value and the obtained feedback. The feedback controller 140 may for example be a proportional-integral-derivative (PID) controller.

The output may be a corrective signal which may be used to update the control signal. For example, the feedback controller output may be added to the control signal.

As illustrated in figure 2 by the dashed arrow connecting step 1050 with step 1030, the method may continue operating 1030 the device 150 with the updated control signal, receiving 1040 feedback and updating 1050 the control signal, in a repeated manner, so that the operating parameter may become ever closer to the reference value.

Next, the relationship (stored in the memory unit 110 in figure 1) may be updated (1060) for the reference value based on the output from the feedback controller 140.

Updating (1060) the control value related to the reference value in the stored relationship may result in a new control value being used as a basis for the control signal. This is illustrated in figure 2 by the arrow connecting step 1060 with step 1020. From step 1020, the method continues as described above until a new reference value is received. When a new reference value is received (1010), the method restarts with obtaining (1020) a new control value based on a known relationship between stored reference values and control values using the new reference value.

As the relationship between the reference values and the control values gets updated, the influence of the feedback controller on the control signal may become smaller and smaller (unless the device is subject to changes affecting the control), since the portion of the control signal being based on the control value received from the relationship becomes more and more accurate.

With reference to figure 3, a method for controlling operation of a device in accordance with some embodiments will be described.

Figure 3 shows a flowchart illustrating a method 2000 in which the first five steps 1010-1050 are equivalent to the steps 1010-1050 of method 1000 described with reference to figure 2. The method 2000 comprises further steps relating to updating the relationship between reference values and control values. In figures 3, a diamond shape represents verification of a condition with two possible outcomes.

As is illustrated in figure 3, the method 2000 comprises, after the control signal is updated 1050 using the feedback controller output, verifying 2055 whether at least one update condition is fulfilled.

Such an update condition may be that the reference value has remained substantially constant, or within a predefined interval, for a predetermined period of time. Another such update condition may be that the operating parameter has reached the desired value (reference value) or is within a predetermined interval from the reference value.

A further such update condition may be that the control signal has been updated with the feedback controller output a predetermined number of times, i.e. that steps 1030-1050 have been performed a predetermined number of times. Alternatively, such an update condition may be that the control signal has been updated for a predetermined period of time, meaning that a predetermined time has passed since step 1050 was performed or since the last update of the relationship was performed.

Another verification, which may take place during step 2055, is whether the device is in a predetermined state. For example, if the device is at the limits of a normal operating range, e.g. operating at a high torque load, the response of the device to a control signal may not be representative of the normal performance/operation of the system. An update of the relationship may be prevented if it is detected that the device is in such a predetermined state.

If the at least one update condition is fulfilled, and in some embodiments if it is detected that the system is not in a predetermined state, the method comprises proceeding to updating (2065) the relationship between reference values and control values. If the at least one update condition is not fulfilled, the method comprises returning to operating (1030) the device using the updated control signal.

The method 2000 of figure 3 further comprises a modified step for updating (2065) the relationship between stored reference values and control values. In the present method, the relationship is updated (2065) for more than one reference value in a predetermined interval from the reference value, based on the feedback controller output and using a weighting function.

As further illustrated in figure 3, after the step of updating 2065 the relationship, the method 2000 comprises a further verification step 2070, followed by an operation step 2080 relating to smoothing of the updated relationship.

The further verification step 2070 may comprise verifying whether an irregularity within the updated relationship has been detected. Alternatively, the further verification step 2070 may comprise verifying whether a predefined number of updates of the relationship have been performed. If such an irregularity has been detected and/or if such a predefined number of updates have been performed, the method comprises proceeding to the next operation step 2080. If not, the method comprises returning to the step 1020 of finding a control value based on the (now updated) relationship.

In step 2080, the relationship is further updated to lessen any irregularity within the relationship between the control values and the reference values. In other words, the relationship is smoothed to remove for example sharp peaks or abrupt changes in control values. After such an update has been performed, the method 2000 returns to step 1020, to once again find a control value based on the updated relationship and the reference value.

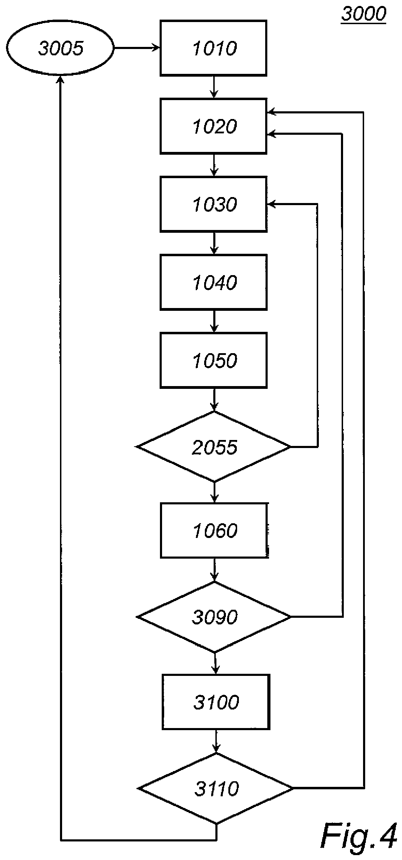

With reference to figure 4, a method for controlling operation of a device in accordance with some embodiments will be described.

Figure 4 comprises a flowchart illustrating a method 3000 in which six steps 1010-1060 are equivalent to the steps 1010-1060 of method 1000 described with reference to figure 2. Further, the step of verifying 2055 an update condition in order to proceed to the step of updating 1060 the relationship between reference values and control values is equivalent to the corresponding step 2055 described with reference to figure 2. This step is, for illustrative purposes, positioned between step 1050 and step 1060.

The method 3000 further comprises, before the step of receiving 1010 an input representative of a reference value, initializing 3005 the relationship between stored reference values and control values to comprise at least one of a list, a look-up table, a curve, and a mathematical function.

Further, the method 3000 comprises, after updating the relationship, monitoring the relationship between reference values and control values and verifying 3090 if any predetermined state is detected. Such a predetermined state may comprise a control value exceeding a first predefined threshold. Such a predetermined state may comprise a difference between two control values related to two successive reference values exceeding a first predefined interval. If such a state is detected, the method includes proceeding to sending an alert 3100. If no such state is detected, the method includes returning to finding 1020 a control value based on the updated relationship.

After sending 3100 an alert, the method may comprise a further verification step 3110 for verifying whether a resetting condition is fulfilled. Such a resetting condition may comprise a control value exceeding a second threshold. Such a resetting condition may be that a difference between two control values related to two successive reference values exceeds a second predefined interval.

If a resetting condition is fulfilled, the method may comprise returning to the initialization step 3005, in which the relationship is reset to the initial relationship and the method starts over.

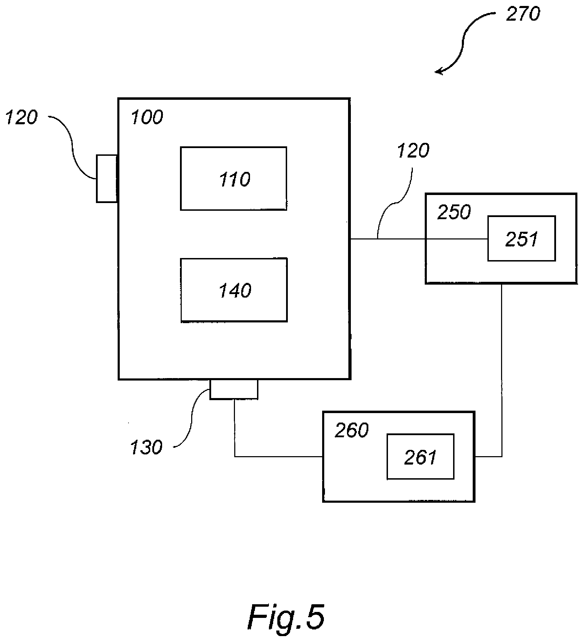

Figure 5 is a schematic illustration of a hydraulic system in accordance with some embodiments.

The hydraulic system 270 comprises a controller 100, which may be equivalent of the controller described with reference to figure 1. The system further comprises hydraulic items 250 including a hydraulic valve 251 and a feedback mechanism 260 comprising a sensor 261. The controller 100 is connected to the hydraulic valve 251. The controller may be configured to control operation of the hydraulic valve in accordance with any one of the methods 1000-3000 described with reference to figures 2-4.

The feedback mechanism is connected to the hydraulic items 250 and to the second input unit 130 of the controller 100. The sensor 261 may be configured to measure a parameter of the hydraulic system, such as a parameter of one of the hydraulic items 250. For example, the sensor 261 may be configured to measure a speed, frequency, position or force (pressure) of one of the hydraulic items 250. The feedback mechanism 260 may be configured to feed back the measurement as feedback to the second input 130 of the controller 100.

The feedback controller 140 may use a reference value derived from an input received at the first input connection 120 and the measurement received from the feedback mechanism 260 to generate a feedback controller output. The feedback controller output may be used to adjust a control signal used by the controller 100 to control operation of the hydraulic valve 251. It will be appreciated that the feedback controller output may be used to adjust the control signal in order for the device (hydraulic valve 251) to reach the reference value. It will further be appreciated that the control signal may have to be adjusted more than once for the device to reach the reference value. When an update condition is fulfilled, the output from the feedback controller 140 may be used to update the known relationship stored in memory unit 110. For example, such an output condition may comprise that the measured parameter of the hydraulic items is within a predetermined interval relative to the reference value.

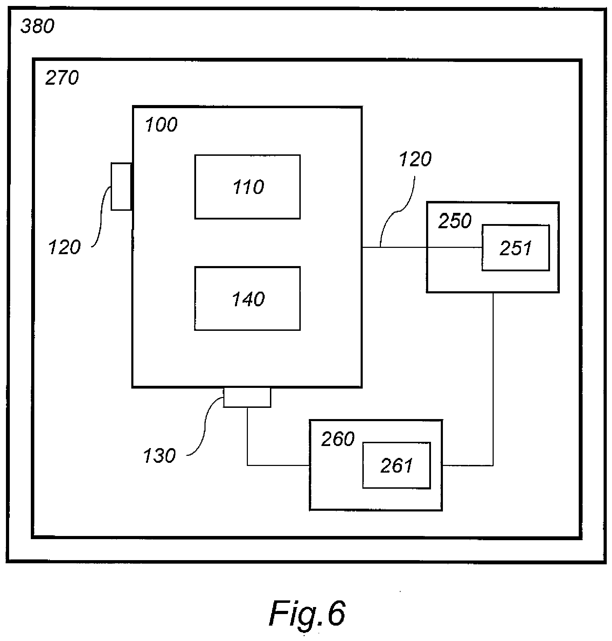

Figure 6 is a schematic illustration of a mining machine in accordance with some embodiments.

The mining machine 380 comprises a hydraulic system 270 which may be equivalent to the hydraulic system described with reference to figure 5.

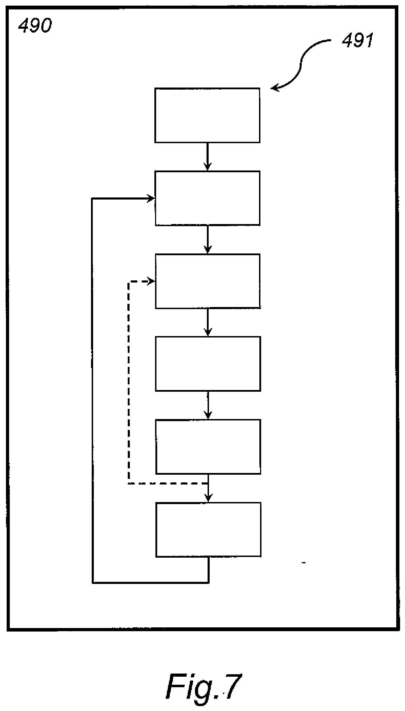

Figure 7 is a schematic illustration of a storage medium in accordance with some embodiments.

The storage medium 490 comprises instructions 491 for a controller to control operation of a device. The instructions 491 may correspond to any of the methods described with reference to figures 2-4.

The storage medium 490 may be any type of storage medium. For example, the storage medium may be one of a CD, DVD or Blu-ray disc, a USB stick, a flash drive, a hard drive etc.

The person skilled in the art realizes that the present invention by no means is limited to the preferred embodiments described above. On the contrary, many modifications and variations are possible within the scope of the appended claims.

For example, the methods described above may comprise further steps and/or different combinations of steps. The controller may comprise further units, and may be adapted to control different devices.

Although features and elements are described above in particular combinations, each feature or element can be used alone without the other features and elements or in various combinations with or without other features and elements.

Additionally, variations to the disclosed embodiments can be understood and effected by the skilled person in practicing the claimed invention, from a study of the drawings, the disclosure, and the appended claims. In the claims, the word "comprising" does not exclude other elements, and the indefinite article "a" or "an" does not exclude a plurality. The mere fact that certain features are recited in mutually different dependent claims does not indicate that a combination of these features cannot be used to advantage.

## Claims

1. A method for controlling operation of a device, the method comprising:
receiving (1010) an input representative of a reference value for an operating parameter of said device;
obtaining (1020) a control value based on a known relationship between stored reference values and control values using the received reference value;
operating (1030) the device with a control signal using the obtained control value;
obtaining (1040) feedback relative to said operating parameter from a feedback mechanism;
adjusting (1050) said control signal using a feedback controller based on said reference value and said feedback; and
updating (1060) said relationship for said reference value based on an output from said feedback controller.

2. The method of claim 1, wherein said relationship between stored reference values and control values comprises at least one of a list, a look-up table, a curve, and a mathematical function.

3. The method of any of the preceding claims, further comprising, before said updating said relationship for said reference value based on an output from said feedback controller, verifying (2055) whether at least one update condition is fulfilled.

4. The method of claim 3, wherein one of said at least one update condition is that said reference value has remained substantially constant, or within a predefined interval, for a predetermined period of time.

5. The method of any of claims 3-4, wherein one of said at least one update condition is that said operating parameter has reached said reference value or is within a predetermined interval from said reference value.

6. The method of any of claims 3-5, wherein one of said at least one update condition is that said control signal has been updated a predetermined number of times or for a predetermined period of time.

7. The method of any of the preceding claims, wherein said updating is prevented if it is detected that said device is in a predefined state.

8. The method of any of the preceding claims, further comprising updating (2065) said relationship for more than one reference value, in a predetermined interval from said reference value, based on said feedback controller output and using a weighting function.

9. The method of any of the preceding claims, further comprising, upon detection of an irregularity within said updated relationship or upon detection of a predefined number of updates of said relationship, updating said relationship (2080) to lessen any irregularity within said relationship between said control values and said reference values.

10. The method of any of the previous claims, further comprising monitoring said relationship and sending an alert (3100) in case a predetermined state is detected (3090), wherein said predetermined state is a control value exceeding a first predefined threshold and/or wherein said predetermined state is a difference between two control values related to two successive reference values exceeding a first predefined interval.

11. The method of any of the previous claims, further comprising resetting said relationship to the initially known relationship if a resetting condition is detected (3110), wherein a resetting condition is a control value exceeding a second threshold, and/or wherein a resetting condition is a difference between two control values related to two successive reference values exceeding a second predefined interval.

12. The method of any of the previous claims, wherein said feedback controller is a proportional-integral-derivative (PID) controller.

13. A controller (100) configured to control operation of a device, said controller being configured to:
receive an input representative of a reference value for an operating parameter of said device;
obtain a control value based on a known relationship between stored reference values and control values using the received reference value;
operate the device with a control signal using the obtained control value;
obtain feedback relative to said operating parameter from a feedback mechanism;
adjust said control signal using a feedback controller based on said reference value and said feedback; and
update said relationship for said reference value based on an output from said feedback controller.

14. The controller of claim 13, wherein said controller is configured to operate in accordance with a method as defined in any of claims 2-12.

15. A hydraulic system (270) comprising:
a hydraulic valve (251);
a controller (100) as defined in claim
13, said controller being configured to control operation of said hydraulic valve; and
a feedback mechanism (260) comprising at least one sensor (261) configured to measure a parameter of said hydraulic system, said feedback mechanism being configured to feed back the measurement as said feedback to said controller.

16. A mining machine (380) comprising at least one hydraulic system (370) comprising a valve as defined in claim
15.

17. A storage medium (490) comprising instructions (491) for a controller to control operation of a device, wherein said instructions comprise:
receiving an input representative of a reference value for an operating parameter of said device;
obtaining a control value based on a known relationship between stored reference values and control values using the received reference value;
operating the device with a control signal using the obtained control value;
obtaining feedback relative to said operating parameter from a feedback mechanism;
adjusting said control signal using a feedback controller based on said reference value and said feedback; and
updating said relationship for said reference value based on an output from said feedback controller.

18. The storage medium of claim
17, further comprising instructions in accordance with a method as defined in any of claims 2-12.
